# EUROPÄISCHE PATENTANMELDUNG

(11) **EP 1 826 381 A2**
(43) Veröffentlichungstag der Anmeldung: **29.08.2007**
(21) Anmeldenummer: 06023888.8
(22) Anmeldetag: 17.11.2006
(51) Int. Cl.: F02D 41/00, F02D 41/22, F02B 39/16

(54) **Bauteileschutz-Strategie bei einem aufgeladenen Verbrennungsmotor**

(30) Priorität: 25.02.2006 DE 102006008855
(71) Anmelder: Dr.Ing. h.c. F. Porsche Aktiengesellschaft, 70435 Stuttgart (DE)
(72) Erfinder: Sterner, Andreas, 71696 Moeglingen (DE); Hofstetter, Matthias, 77975 Ringsheim (DE)

(57) **Zusammenfassung**

Vorgestellt wird ein Verfahren zur Steuerung von Füllungen von Brennräumen (12) eines Verbrennungsmotors (10), der wenigstens ein Füllungsstellglied (16; 26) und einen Abgasturbolader (36) aufweist, dessen Turbinengeometrie durch ein elektrisches Stellelement (43) verstellbar ist und der in einer Grundstellung des elektrischen Stellelements (43) einen Grundladedruck bereitstellt. Das Verfahren zeichnet sich dadurch aus, dass Füllungen der Brennräume (12) bei einer fehlerhaften Auslenkung des elektrischen Stellelements (43) durch eine Ansteuerung des Füllungsstellgliedes (16; 26) begrenzt werden. Ferner wird ein Steuergerät (52) vorgestellt, das den Ablauf des Verfahrens steuert.

## Beschreibung

Die Erfindung betrifft ein Verfahren zur Steuerung von Füllungen von Brennräumen eines Verbrennungsmotors, der wenigstens ein Füllungsstellglied und einen Abgasturbolader aufweist, dessen Turbinengeometrie durch ein elektrisches Stellelement verstellbar ist und der in einer Grundstellung des elektrischen Stellelements einen Grundladedruck bereitstellt. Die Erfindung betrifft ferner ein Steuergerät, welches den Ablauf des Verfahrens steuert.

Ein solches Steuergerät und ein solches Verfahren ist jeweils aus der DE 102 24 051 bekannt. Das bekannte Verfahren wird im Zusammenhang mit einem Abgasturbolader vorgestellt, dessen Turbinenrad durch einen ringförmigen Querschnitt mit Abgas des Verbrennungsmotors angeströmt wird. In dem ringförmigen Querschnitt sind Leitschaufeln angeordnet. Das elektrische Stellelement verstellt die Stellung dieser Leitschaufeln und ändert damit sowohl den für die Abgas nutzbaren Strömungsquerschnitt als auch die Strömungsrichtung der Abgase. Damit wird letztlich der Energieübertrag vom Abgas auf das Turbinenrad beeinflusst.

In einer Grundstellung des elektrischen Stellelements sind die Leitschaufeln so eingestellt, dass sich ein großer Strömungsquerschnitt der Abgase in Bezug auf das Turbinenrad ergibt. Das Aufstauverhalten der Turbine ist in diesem Zustand gering. Der Energieübertrag ist dann minimal und der Abgasturbolader stellt den Grundladedruck bereit.

Mit wachsender Auslenkung des elektrischen Stellelements wird der Strömungsquerschnitt kleiner und das Aufstauverhalten der Turbine größer. Letztlich steigt damit das Enthalpiegefälle des Abgäses über der Turbine und damit die auf das Turbinenrad übertragene Energie an. Damit steigt auch der Ladedruck an.

Mit steigendem Ladedruck steigt die Brennraumfüllung und, bei entsprechender Kraftstoffdosierung, das vom Verbrennungsmotor entwickelte Drehmoment. Bei einem Verbrennungsmotor in einem Kraftfahrzeug wird ein Drehmomentwunsch eines Fahrers bei funktionsfähigem System durch koordiniertes Steuern des Füllungsstellgliedes und des Ladedrucks realisiert. Bei fehlerhafter Auslenkung des elektrischen Stellelements ist der Ladedruck zu hoch und es wird zuviel Drehmoment produziert.

Bei dem bekannten Gegenstand ist das elektrische Stellelement über eine federbelastete Mechanik mit den Leitschaufeln gekoppelt. Das elektrische Stellelement muss die Leitschaufeln gegen die Federkraft aus der Grundstellung auslenken. Als Vorteil ergibt sich eine automatische Rückstellung der Leitschaufeln in ihre Grundstellung und damit eine automatische Einstellung des Grundladedrucks, wenn bei ausgelenktem elektrischen Stellelement ein Stromausfall auftritt. Ohne die Federkraft würde das Stellelement dann unter Umständen wegen hemmenden Reibungskräften in einer ausgelenkten Stellung verharren.

Verbrennungsmotoren mit Abgasturboladern reagieren prinzipbedingt verzögert auf einen Fahrerwunsch nach schnell steigendem Drehmoment. Die Verzögerung wird bei Systemen mit variabler Turbinengeometrie dadurch verringert, dass die Leitschaufeln für einen schnellen Drehmomentanstieg schnell auf eine Position mit erhöhter Energieübertragung vom Abgas auf das Turbinenrad eingestellt werden. Das Turbinenrad wird dann stärker beschleunigt und der Ladedruck steigt schneller an. In der Mechanik auftretende Rückstellkräfte verlangsamen die Geschwindigkeit, mit der die Leitschaufeln in die gewünschte Position verstellt werden können.

Vor diesem Hintergrund besteht die Aufgabe der Erfindung in der Angabe eines Verfahrens, das eine Begrenzung des Drehmoments bei einer tatsächlichen oder möglichen fehlerhaften Auslenkung des elektrischen Stellelements in Verbindung mit einer schnelleren Verstellung der Leitschaufeln erlaubt. Eine solche fehlerhafte Auslenkung kann z. B. bei einem elektrischen Fehler des elektrischen Stellelements oder seiner Energieversorgung oder durch mechanische Fehler, beispielsweise ein mechanisches Klemmen des elektrischen Stellelements oder der beteiligten Verstellmechanik auftreten.

Diese Aufgabe wird bei einem Verfahren der eingangs genannten Art dadurch gelöst, dass Füllungen der Brennräume bei einer möglichen oder tatsächlichen fehlerhaften Auslenkung des elektrischen Stellelements durch eine Ansteuerung des Füllungsstellgliedes begrenzt werden. Ferner wird diese Aufgabe bei einem Steuergerät der eingangs genannten Art dadurch gelöst, dass es das Füllungsstellglied entsprechend ansteuert.

Die Füllungsbegrenzung über das Füllungsstellglied begrenzt die Füllung auch bei fehlerhaft erhöhtem Ladedruck. Daher kann auf Federn oder andere elastische Elemente, die eine mechanische Rückstellkraft aufbringen, verzichtet werden. Als Folge ergibt sich dann bei gleicher Verstellkraft und/oder gleichem Stellelement ein schnellerer Ladedruckanstieg bei einem Fahrerwunsch nach einem schnell steigenden Drehmoment ohne die Gefahr, dass bei einer fehlerhaften Auslenkung des elektrischen Stellelements zu große Brennraumfüllungen erzeugt werden.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Verbrennungsmotor mit einem Abgasturbolader mit variabler Turbinengeometrie;
- Fig. 2: eine Prinzip-Darstellung der Variation der Turbinengeometrie; und
- Fig. 3: ein Ausführungsbeispiel des erfindungsgemäßen Verfahrens.

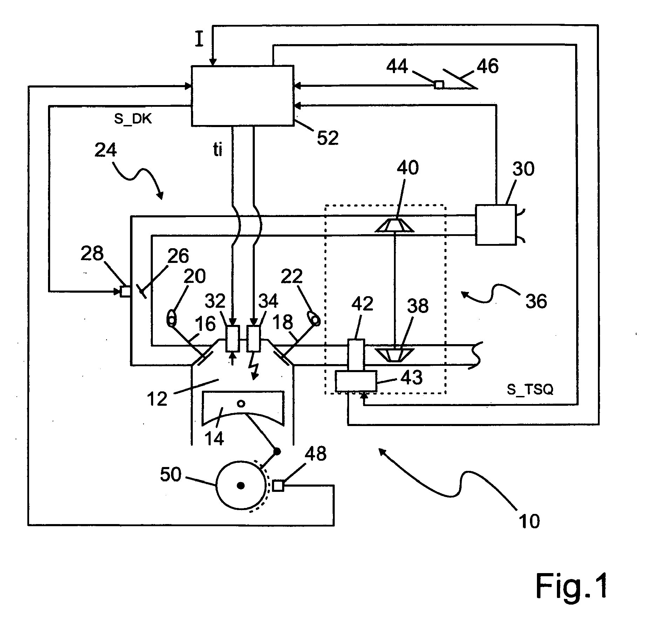

Im Einzelnen zeigt Fig. 1 einen Verbrennungsmotor 10 mit wenigstens einem Brennraum 12, der von einem Kolben 14 beweglich abgedichtet wird. Ein Wechsel von Füllungen des Brennraums 12 wird über ein Einlassventil 16 und ein Auslassventil 18 gesteuert, wobei das Einlassventil 16 von einem Einlassventilsteller 20 und das Auslassventil 18 von einem Auslassventilsteller 22 betätigt wird. Der Einlassventilsteller 20 steuert das Einlassventil 16 in einer Ausgestaltung mit einem variablen Hub und dient so als Füllungsstellglied.

Bei geöffnetem Einlassventil 16 strömt Luft oder ein Gemisch aus Luft und Brennstoff aus einem Ansaugsystem 24 in den Brennraum 12. Die Menge der einströmenden Luft oder des einströmenden Gemisches wird alternativ oder ergänzend zu einer Variation des Hubes des Einlassventils 16 über eine Drosselklappe 26 eingestellt, die durch einen Drosselklappensteller 28 betätigt wird. In jedem Fall wird die Brennraumfüllung dabei maßgeblich vom Druck vor der Drosselklappe 26 und/oder dem Einlassventil 16 als jeweiligem Füllungsstellglied beeinflusst.

Die Brennraumfüllung wird bevorzugt mit einem Füllungssensor 30 gemessen, der als Luftmassenmesser oder Saugrohrdrucksensor realisiert sein kann. Der Kraftstoff wird entweder in das Ansaugsystem 24 (Saugrohreinspritzung) dosiert oder durch einen Injektor 32 direkt in den Brennraum 12 eingespritzt. (Direkteinspritzung).

Auf jeden Fall wird in dem Brennraum 12 eine brennfähige Brennraumfüllung erzeugt, die von einer Zündkerze 34 gezündet wird. Restgase der verbrannten Füllung des Brennraums 12 werden über das geöffnete Auslassventil 18 ausgestoßen.

Der in der Figur 1 dargestellte Verbrennungsmotor 10 weist einen Abgasturbolader 36 auf, dessen Turbinenrad 38 von den ausgestoßenen Abgasen angetrieben wird und das seinerseits ein Verdichterrad 40 im Ansaugsystem 24 antreibt. Der Abgasturbolader 36 weist ferner einen Steller 42 mit einem elektrischen Stellelement 43 zur Steuerung der Geometrie des Abgasturboladers 36 auf. Das elektrische Stellelement 43 ist typischerweise ein Elektromotor, der in Verbindung mit einer Mechanik des Stellers 43 eine geradlinige oder krummlinige Stellbewegung erzeugt.

Drehmomentanforderungen eines Fahrers werden durch einen Fahrerwunschgeber 44 erfasst, der die Stellung eines Fahrpedals 46 des Kraftfahrzeugs erfasst. Ein Drehwinkelsensor 48 tastet Winkelmarkierungen eines drehfest mit einer Kurbelwelle des Verbrennungsmotors 10 verbundenen Geberrades 50 ab und liefert damit eine Information über die Winkellage und Winkelgeschwindigkeit der Kurbelwelle.

Es versteht sich, dass zur Steuerung und/oder Regelung des Verbrennungsmotors 10 bei modernen Kraftfahrzeugen eine Vielzahl weiterer Sensoren vorhanden sein kann, die Drücke, Temperaturen, Winkellagen von Nockenwellen und/oder weitere Betriebsparameter des Verbrennungsmotors 10 erfassen. Die Erfindung ist daher nicht auf eine Verwendung bei einem Verbrennungsmotor 10 beschränkt, der nur die bisher angegebenen Sensoren 30, 44, 48 aufweist. So kann das elektrische Stellelement 43 in einer Ausgestaltung eine Information I über eine eingestellte Leitschaufelposition (d. h. eine Lagerückmeldung) oder ein Eigendiagnoseergebnis bereit stellen.

Zur Steuerung des Verbrennungsmotors 10 werden die Signale des Füllungssensors 30, des Fahrerwunschgebers 44, des Drehwinkelsensors 48, die optional vorhandene Information I und ggf. die Signale alternativer oder weiterer Sensoren von einem Motorsteuergerät 52 verarbeitet, das daraus Stellsignale zur Steuerung von Funktionen des Verbrennungsmotors 10 bildet.

Wesentlich sind in diesem Zusammenhang Stellsignale, mit denen die Brennraumfüllungen beeinflusst werden. In der Ausgestaltung der Fig. 1 sind dies im Wesentlichen Drosselklappenstellsignale S_DK und Signale S_TSQ, mit denen das Steuergerät 52 einen Turbinen-Öffnungsquerschnitt TSQ steuert. Darüber hinaus bildet das Steuergerät 52 aber auch weitere Stellsignale, zum Beispiel Einspritzimpulsbreiten ti.

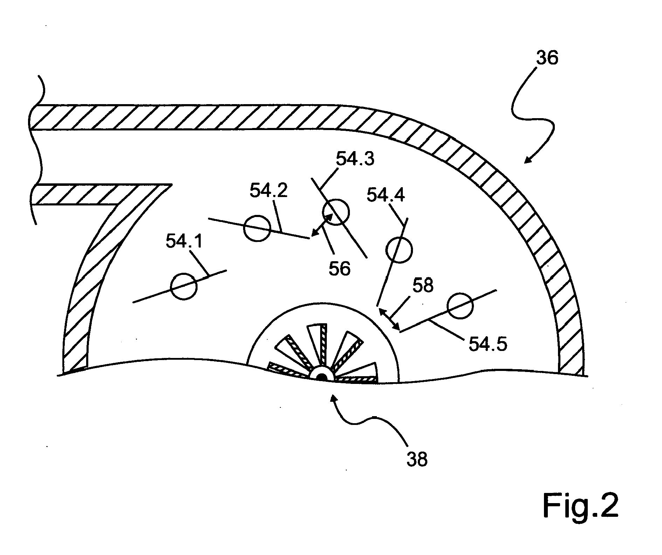

Fig. 2 zeigt eine Ausgestaltung einer Turbine eines Abgasturboladers mit ringförmig angeordneten Leitschaufeln 54.1, 54.2, 54.3, 54.4 und 54.5. Abweichend von der Realität, in der sämtliche Leitschaufeln 54.1, 54.2, 54.3, 54.4 und 54.5 gleich eingestellt werden, sind die Leitschaufeln 54.1, 54.2 und 54.2 in einer geschlossenen Stellung mit einem kleinen Strömungsquerschnitt 56 und die Leitschaufeln 54.4. und 54.5 in einer weiter offenen Stellung mit einem größeren Strömungsquerschnitt 58 dargestellt. Der Grundladedruck wird dabei mit dem größeren Strömungsquerschnitt 58 dargestellt. Bei funktionsfähigem elektrischen Stellelement 43 werden die Leitschaufeln je nach Drehmomentanforderung zwischen den beiden Extremlagen verstellt. Details der Mechanik sind für die Erfindung nicht wesentlich. Wesentlich ist lediglich, dass die Leitschaufeln bei einem Stromausfall oder einem anderen Fehler des elektrischen Stellelements 43 oder auch beim Klemmen der Verstellmechanik oder des Leitapparates in einer Stellung stehen bleiben können, in der permanent ein erhöhter Ladedruck generiert wird (fehlerhafte Auslenkung). Bei weit geöffnetem Füllungsstellglied kann es dann zu übermäßig großen Brennraumfüllungen kommen, die ohne Gegenmaßnahmen zu Schäden an Bauteilen des Verbrennungsmotors führen können.

Zur Vermeidung solcher Schäden werden Füllungen der Brennräume 12 bei einem Fehler des elektrischen Stellelements 43 durch eine Ansteuerung des Füllungsstellgliedes 16 und/oder 26 begrenzt. Dabei erfolgt die Ansteuerung so, dass eine aus dem erhöhten Ladedruck resultierende Vergrößerung der Füllung durch eine entgegengesetzt gerichtete Verringerung der Öffnung des Füllungsstellgliedes 16 und/oder 26 wenigstens kompensiert wird. Im Gegensatz zum Stand der Technik, bei dem die Rückholfeder die Leitschaufeln in die Grundladedruck-Stellung zurückfährt und damit die Ursache des erhöhten Ladedrucks beseitigt, wird beim Anmeldungsgegenstand die Stellung der Leitschaufeln nicht gezielt durch äußere Kräfte verändert.

Es wird daher ein Verfahren zur Steuerung von Füllungen von Brennräumen 12 eines Verbrennungsmotors 10 bereit gestellt, der wenigstens ein Füllungsstellglied 16/und oder 26 und einen Abgasturbolader 36 ohne elastisches Rückstellelement aufweist, dessen Turbinengeometrie durch ein elektrisches Stellelement 43 verstellbar ist und der in einer Grundstellung des elektrischen Stellelements 43 einen Grundladedruck bereitstellt. Die Sicherheitsfunktion eines elastischen Rückstellelements wird dadurch ersetzt, dass Füllungen der Brennräume 12 bei einem Stromausfall des elektrischen Stellelements 43 durch eine Ansteuerung des Füllungsstellgliedes 16 und/oder 26 begrenzt werden.

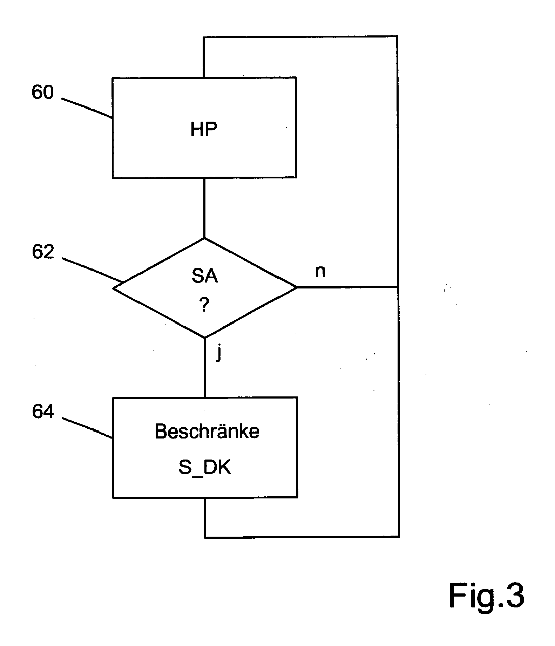

Fig. 3 zeigt ein Flussdiagramm als Ausführungsbeispiel des Verfahrens. Aus einem übergeordneten Hauptprogramm HP zur Steuerung des Verbrennungsmotors 10, das durch den Schritt 60 repräsentiert wird, verzweigt das Programm in einen Schritt 62, in dem eine tatsächliche oder mögliche fehlerhafte Auslenkung des elektrischen Stellelements 43 detektiert wird. Eine tatsächliche fehlerhafte Auslenkung kann z. B. daran erkannt werden, dass die Lagerückmeldung I, also der Istwert der Leitschaufelposition, von einem Sollwert abweicht. Eine mögliche fehlerhafte Auslenkung liegt z. B. bei einem Stromausfall oder allgemeiner einem Ausfall der elektrischen Energieversorgung des elektrischen Stellelements 43 vor, weil dann die Lagerückmeldung I fehlt.

Die Detektion erfolgt in einer Ausgestaltung durch eine Überwachung elektrischer Betriebsparameter des elektrischen Stellelements 43. So kann ein Fehlen der Information I des elektrischen Stellglieds 43 vom Steuergerät 52 als (mögliche) Fehlauslenkung des elektrischen Stellglieds 43 gewertet werden.

Alternativ oder ergänzend erkennt das Steuergerät 52 den Stromausfall SA oder allgemeiner eine fehlerhafte Auslenkung durch eine Überwachung von Betriebsparametern des Verbrennungsmotors 10. Dazu wird in einer Ausgestaltung zunächst ein erster Wert eines Maßes einer Brennraumfüllung unter der Annahme eines fehlerfreien elektrischen Stellglieds 43 und eine Ansteuersignalen des Füllungsstellglieds 16 und/oder 26 und des elektrischen Stellelements 43 berechnet. Ferner wird ein zweiter Wert des Maßes aus wenigstens einer Messgröße für die Brennraumfüllung bestimmt. Eine typische Messgröße ist in diesem Zusammenhang ein Luftmassenstrom, ein Ladedruck oder ein Brennraumdruck.

Anschließend wird der erste Wert mit dem zweiten Wert verglichen. Eine tatsächliche fehlerhafte Auslenkung des elektrischen Stellelements äußert sich darin, dass eine Differenz aus dem zweiten Wert und dem ersten Wert einen vorbestimmten Schwellenwert übersteigt.

An eine erkannte fehlerhafte Auslenkung schließt sich im Schritt 64 eine Begrenzung von Füllungen der Brennräume 12 durch eine Ansteuerung des Füllungsstellgliedes 16 und/oder 26 an. Die Begrenzung erfolgt in einer Ausgestaltung durch eine Beschränkung des Öffnungswinkels der Drosselklappe 26 durch Ausgabe entsprechend beschränkter Stellsignale S_DK. Ergänzend kann die erlaubte Höchstdrehzahl des Verbrennungsmotors 10 beschränkt werden. Es sind gerade die stationären Betriebsbereiche mit hoher Drehzahl und großen Drosselklappenöffnungswinkeln, in denen im fehlerfreien Betrieb niedrige Ladedrücke eingestellt werden. Umgekehrt gilt, dass diese Betriebsbereiche bei einer fehlerhaften Auslenkung des elektrischen Stellelements 43 bei einem kleinen Öffnungsquerschnitt der Leitschaufeln besonders kritisch sind.

Wird dagegen in dem Schritt 62 keine (mögliche oder tatsächliche) fehlerhafte Auslenkung detektiert, kehrt das Programm ohne Beschränkung der Ansteuerung des Füllungsstellgliedes 16 und/oder 26 zum Hauptprogramm im Schritt 60 zurück.

## Patentansprüche

1. Verfahren zur Steuerung von Füllungen von Brennräumen (12) eines Verbrennungsmotors (10), der wenigstens ein Füllungsstellglied (16; 26) und einen Abgasturbolader (36) aufweist, dessen Turbinengeometrie durch ein elektrisches Stellelement (43) verstellbar ist und der in einer Grundstellung des elektrischen Stellelements (43) einen Grundladedruck bereitstellt, **dadurch gekennzeichnet, dass** Füllungen der Brennräume (12) bei einer möglichen oder tatsächlichen fehlerhaften Auslenkung des elektrischen Stellelements (43) durch eine Ansteuerung des Füllungsstellgliedes (16; 26) begrenzt werden.

2. Verfahren nach Anspruch 1, **dadurch gekennzeichnet, dass** eine mögliche oder tatsächliche fehlerhafte Auslenkung des elektrischen Stellelements (43) durch eine Überwachung elektrischer Betriebsparameter des elektrischen Stellelements (43) erkannt werden.

3. Verfahren nach Anspruch 1 oder 2, **dadurch gekennzeichnet, dass** eine tatsächliche fehlerhafte Auslenkung des elektrischen Stellelements (43) durch eine Überwachung von Betriebsparametern des Verbrennungsmotors (10) erkannt wird.

4. Verfahren nach Anspruch 3, **dadurch gekennzeichnet, dass** ein erster Wert eines Maßes einer Brennraumfüllung unter der Annahme eines fehlerfreien elektrischen Stellelements (43) und Ansteuersignalen des Füllungsstellglieds (16; 26) und des elektrischen Stellelements (43) berechnet wird, ein zweiter Wert des Maßes aus wenigstens einer Messgröße für die Brennraumfüllung bestimmt wird, erster Wert und zweiter Wert miteinander verglichen werden und eine tatsächliche fehlerhafte Auslenkung des elektrischen Stellelements (43) erkannt wird, wenn eine Differenz aus dem zweiten Wert und dem ersten Wert einen vorbestimmten Schwellenwert übersteigt.

5. Verfahren nach Anspruch 4, **dadurch gekennzeichnet, dass** das die Messgröße ein Luftmassenstrom, ein Ladedruck oder ein Brennraumdruck ist.

6. Steuergerät (52) zur Steuerung von Füllungen von Brennräumen (12) eines Verbrennungsmotors (10), der wenigstens ein Füllungsstellglied (16; 26) und einen Abgasturbolader (36) aufweist, dessen Turbinengeometrie durch ein elektrisches Stellelement (43) verstellbar ist und der in einer Grundstellung des elektrischen Stellelements (43) einen Grundladedruck bereitstellt, **dadurch gekennzeichnet, dass** das Steuergerät (52) Füllungen der Brennräume (12) bei einer möglichen oder tatsächlichen fehlerhaften Auslenkung des elektrischen Stellelements (43) durch eine Ansteuerung des Füllungsstellgliedes (16; 26) begrenzt.
